Europäisches Patentamt

European Patent Office

Office européen des brevets

(11) Publication number: **0 240 227**
**A2**

# EUROPEAN PATENT APPLICATION

(21) Application number: **87302532.4**

(22) Date of filing: **24.03.87**

(51) Int. Cl.⁴: **G03B 35/00**

(30) Priority: **27.03.86 GB 8607668**

(43) Date of publication of application:
**07.10.87 Bulletin 87/41**

(84) Designated Contracting States:
**DE FR GB**

(71) Applicant: **Allen, Gordon Stanley James**
**2 Pont Street**
**London SW1X 9EL(GB)**

(72) Inventor: **Allen, Gordon Stanley James**
**2 Pont Street**
**London SW1X 9EL(GB)**

(74) Representative: **Rackham, Stephen Neil et al**
**GILL JENNINGS & EVERY 53-64 Chancery Lane**
**London WC2A 1HN(GB)**

(54) **Three dimensional movie film.**

(57) A movie film to provide a three dimensional image for the viewer is made by creating at each of a number of successive instants in time a number of simultaneous images of an object from a number of different viewpoints, using the number of simultaneous images to produce a composite hologram of the object for each particular instant, and recording the composite holograms representing the successive instants one after another in sequence along a film. To view such a film each composite hologram is moved into a field of view and illuminated in succession one after another at a rate above the flicker frequency of human observation. Each composite hologram creates a three-dimensional image of the object as seen from a number of different viewpoints and then the sequence of composite holograms enables the observer to follow movements of the object as this varies with time.

## Three Dimensional Movie Film

Ever since movie films were first made various attempts have been made to provide a three dimensional image for the viewer to provide a more realistic image.

In the past most attempts have been based on the principles of a stereoscope. Thus, two separate two dimensional views of the object are recorded from different viewpoints. Typically these different viewpoints are the two different viewpoints that would be seen by a viewer's eyes. The resulting pair of images are then viewed with the viewer's left eye only seeing the image taken from the left hand viewpoint and with the viewer's right eye only seeing the image taken from the right hand viewpoint. With a typical stereoscope a stereoviewer merely has a division between the left and right sides to ensure that each eye sees only its correct image. However, with moving pictures such arrangements are not practical and other ways have to be used to ensure that each eye only receives its correct image.

One way in which this has been done is to project the images for the left hand eye of the viewer using say red light whilst projecting the images for the right hand eye of the viewer in green light. The viewer then wears a pair of spectacles the left hand lens of which transmits only red light and the right hand lens on which transmits only green light. More recently a somewhat similar system has been used in which the light for each eye has a different polarization state and the viewer wears polarizing spectacles with lenses that transmit only appropriately polarized light. Such arrangements are very much better than ones using coloured filters since they enable full colour images to be produced but it is still inconvenient as it requires the viewers to wear spectacles to be able to see the three dimensional effect. However this is currently the best that is commercially available.

Since holograms were first invented various attempts and proposals have been made to use them to produce three dimensional moving images but, as yet, none of these proposals provide a satisfactory system suitable for use in the production of cinematographic movie films.

A hologram is an interference pattern produced by taking light from a coherent light source which, in practice, is usually a laser, and splitting it into at least two separate beams one of which interacts with an object to be holographed, and the other of which acts as a reference beam, and then recombining light from the two beams. The interference pattern can be captured by placing a film or plate coated with a photosensitive emulsion in a location where it receives both beams. When such a hologram is illuminated by a reconstruction laser beam located at the same orientation as the reference beam a three dimensional image of the object is produced.

To produce a hologram in this way it is essential to use monochromatic light only and it is also essential for both the reference beam and the beam which interacts with the object to be coherent which, in practice, means that the film or plate must be located in a position in which both beams have travelled an approximately equal distance from the laser. Clearly the more beams that are used to illuminate the object the more difficult it is to achieve this condition.

To avoid the use of a monochromatic reconstruction beam it is possible to make a white light transmission hologram. To do this the hologram is used as an object and a further hologram is produced. This further hologram which is sometimes referred to as a Benton hologram provides a visible image when viewed by white light from a point source.

A more complicated type of hologram is known as a composite hologram. Composite holograms work on a similar principle to that used in stereoscopes in that they rely upon the principle of creating an illusion of a three dimensional image by sending to each eye of an observer a different image of the object taken from a different view point. However, unlike a stereoscope they are not limited to one viewpoint and a composite hologram stores images taken from a number of directions around an object.

A composite hologram is typically made by placing a stationary object on a revolving table which turns slowly whilst a cine-camera films it. Alternatively, the cine-camera is moved along a linear track as it films the object. The resulting cine-film provides a series of photographs of the object each of which has been taken from a different viewpoint. A hologram is produced from each of these separate photographs and these holograms are formed successively as strips on a single sheet of film. On viewing such a hologram the observer uses a different strip hologram to provide the image received by each eye. Thus the observer's eyes receive images of the object taken from the two different viewpoints and thus the observer perceives a three-dimensional image. As the observer moves relative to the hologram the observer sees around the object.

Composite holograms can be made to reproduce a simple movement. When the object moves very slowly whilst it is being rotated past the cine-camera this movement is repeated as the observer moves along to the resulting hologram. However, it is only possible to reproduce slow motion. If any attempt is made to follow a rapid movement the image seen by say the left eye is different not only in spatial arrangement but in time from that received by the right eye. The maximum length of any such movement is limited to that of the time for one complete revolution of the table.

Attempts to create a three dimensional movie film using holographic images have therefore concentrated on laser pulse illumination techniques. In this arrangement a pulsed laser beam is used which has a repetition frequency greater than the flicker rate detectable by the human eye. A hologram is created for each pulse of laser illumination with a film stock upon which the holograms are created being transported between pulses in a similar way to that occurring in a conventional cine-camera.

There are a variety of disadvantages in this system of moving picture production all of which basically are caused by the need to light the entire scene to be holographed with coherent light taken from the same single source as that used for the reference beam. Whilst the light from the source may be split into a number of different beams to provide a illumination over relatively small scenes it is clearly impossible to light large and outdoor scenes using such techniques. Equally, the power of the pulsed lasers required to light even a relatively small scene is so great that damage to the eyesight of any human being involved as an actor or even anywhere on the set may result unless they wear protective spectacles. Of course since the scene is illuminated by coherent light it is only possible to obtain monochromatic images. Not surprisingly therefore there are no systems in use commercially at present.

According to this invention a three dimensional movie film is made by creating at each of a number of successive instants in time a number of simultaneous images of an object from a number of different viewpoints, using the number of simultaneous images to produce a composite hologram of the object for each particular instant, and recording the composite holograms representing the successive instants one after another in sequence along a film.

To view such a film each composite hologram is moved into a field of view and illuminated in succession one after another at a rate above the flicker frequency of human observation. Each composite hologram creates a three-dimensional image of the object as seen from a number of different viewpoints and then the sequence of composite holograms enables the observer to follow movements of the object as this varies with time.

Preferably the number of simultaneous images of the object from a number of different viewpoints are created by two or more cameras which are synchronised with one another and which create a record of the object from the two or more different positions. These cameras may be video cameras or conventional cine-cameras but, in any event, they must be synchronised to operate in phase and at the same repetition frequency. Preferably many fewer cameras are used than the number of viewpoints required to produce the composite holograms. In this case the images obtained from the two or more cameras are processed by image processing means to produce additional images corresponding to the number required to produce the composite holograms. When cine-cameras are used the image processing takes place after the films have been developed and after the developed images have been converted into electronic signals and even when video cameras are used the image processing usually takes place subsequently. The number of different viewpoints may be as low as two or as high as three hundred depending on the spatial resolution required. Typically it is at least ten and preferably around thirty.

The image processing means preferably includes a programmed computer which is programmed to scan the images obtained from the two or more cameras, interpolate the information contained in these images, and generate information corresponding to the images of the number of required viewpoints. Typically the images from the two cameras or the two adjacent cameras, is line-scanned and the computer then compares the results of the corresponding line scans of these two images. Features that are a long distance away from both cameras tend to appear in substantially identical positions on both scans and have the same form. Features that are nearer the cameras and not central appear at different locations on each line scan. Thus the computer is programmed to look at the time shaft between corresponding parts of the two images and generate the information corresponding to the other required viewpoints from this time shift. The images may be scanned along more than one axis.

Typically the computer is programmed with a viewpoint generating program which analyses the information obtained from the images produced by the two or the two adjacent cameras to identify particular objects and compares and identifies discrepancies between the images of the same object produced by the two cameras. From this comparison the computer then generates image information corresponding to the other required viewpoints. Preferably the analysis of the information obtained from the images is carried out in a number of stages, initially it seeks to recognize readily identifiable shapes and then to recognize and identify common special cases such as the appearance of rounded objects and knife edges. Once such special cases have been identified the information on them for the other required viewpoints can be generated. A final stage in the analysis enables manual intervention in the generation of the other viewpoints.

Alternatively, the viewpoint generating program may initially compare a line scan of the images from the two or the two adjacent cameras and generate common image information corresponding to the information common to both images and generates time shifted image information corresponding to the parts of the two images which are time shifted with respect to one another. The extent of the time shift that the program imparts to this information depends upon the viewpoint being generated.

The computer may also include a time difference program which compares the images from one camera at one instant in time or one frame with that from the same camera at a successive instant in time or next frame. Preferably, successive images from all of the cameras are compared in this way. Then, if these images are generally similar, instead of the computer performing the viewpoint generating program for each instant in time or each frame, the information for each viewpoint is merely changed in a way corresponding to any change detected in successive images from the or each camera. Preferably the computer also includes a control program which, initially causes it to perform the viewpoint generating program and then, subsequently, perform the time difference program until a significant change occurs in the image received by one of the cameras. Then the control program causes the computer to operate the viewpoint generating program again. Thus the time difference program continues to operate until the difference between the images of sequential instants in time or sequential frames exceeds a preset value. This significant difference may be caused by a change of scene or by the entry into the image of an article or character. The use of the time difference program which is generally simpler enables the viewpoint information to be generated more easily and quickly since it reduces the computer time required to generate the viewpoint information.

Once the information concerning the object from the number of different viewpoints has been obtained it must then be put into a form in which a hologram can be prepared from it. One way of achieving this is to use the information to modulate a laser beam as it is scanned over an image receiving surface such as a ground glass screen or over a holographic lens, and then cause light scattered from the screen or formed by the lens to interfere with an unmodulated beam from the same laser to generate a strip of the composite hologram. Another way of achieving this is to use the information to produce a visible image, such as a photograph and then use the resulting visible image as the object in the generation of a strip of the composite hologram. One way in which this can be achieved is to use the viewpoint information for each frame to control the flying spot of a high resolution flying spot tube to produce an image on a corresponding frame of a movie film. Thus a separate movie film can be produced for each viewpoint, and corresponding frames of all of these separate movie films be used to generate the composite holograms. Preferably however, each viewpoint for one instant in time is recorded as a group of successive frames of a movie film and then each viewpoint for the next instant as the next group of successive frames, and so on. This facilitates the generation of the composite holograms with successive groups of frames producing successive composite holograms.

The sequence of composite holograms may be viewed using a laser to illuminate them. Typically the laser operates continuously and the composite holograms are viewed using a shutter mechanism or an image stopping optical element which runs counter to the motion of the holographic film. Alternatively the laser may be pulsed to provide an intermittent source of illumination. Preferably however the sequence of composite holograms is converted into a corresponding sequence of white-light transmission or Benton holograms in a conventional manner and these can then be viewed using a point source of white light or a line source aligned with the strips of the composite hologram. The sequence of white-light transmission or Benton holograms may also be viewed by using a three-dimensional holographic screen.

Films can be made in monochrome as described above, or in quasi-colour by using the Land 2-colour effect or in full colour. In the latter cases, the initial images of the object are obtained in full colour and 2 or 3 colour separations are made either by using a colour video camera or by scanning a colour film. Then in the process of producing the sequence of composite holograms sequential lines in each composite hologram or sequential holograms are produced from red and green; or red, green and blue colour separations. In the production of the Benton holograms from the composite holograms the lines in each hologram or the holograms corresponding to the red colour separation are made to provide a red image by the position of the master hologram or the angle of the reference beam and so on for the other separations. Otherwise the procedure is essentially the same.

Typically the object which is the subject of the three dimensional movie film is a normal film set or is a location scene, however, the object may be a number of two dimensional images with different images being used as the subjects for the different viewpoints to create a three dimensional cartoon or animated movie. In this latter case the two dimensional images may be drawn or may be generated as a visible output from a computer via a television screen or a high resolution flying spot tube.

In a conventional composite hologram showing movement this movement is created by relative movement between the observer and the hologram. In this system, each composite hologram is not used to convey movement but rather to provide the three dimensional view of the scene. As the observer moves relative to an individual composite hologram the viewpoint changes but there is no change in movement of the scene. The movement is provided by viewing the sequence of composite holograms one after another.

Two examples in accordance with this invention will now be described with reference to the accompanying drawings; in which:-

Figure 1 is a diagram of a camera set up for recording a scene;

Figure 2 is a schematic diagram of a first example of an optical system for producing composite holograms;

Figure 3 is a second example of an optical system for producing composite holograms;

Figure 4 is a plan of a film at an intermediate stage; and,

Figure 5 is a plan of a film at an intermediate stage when preparing coloured images.

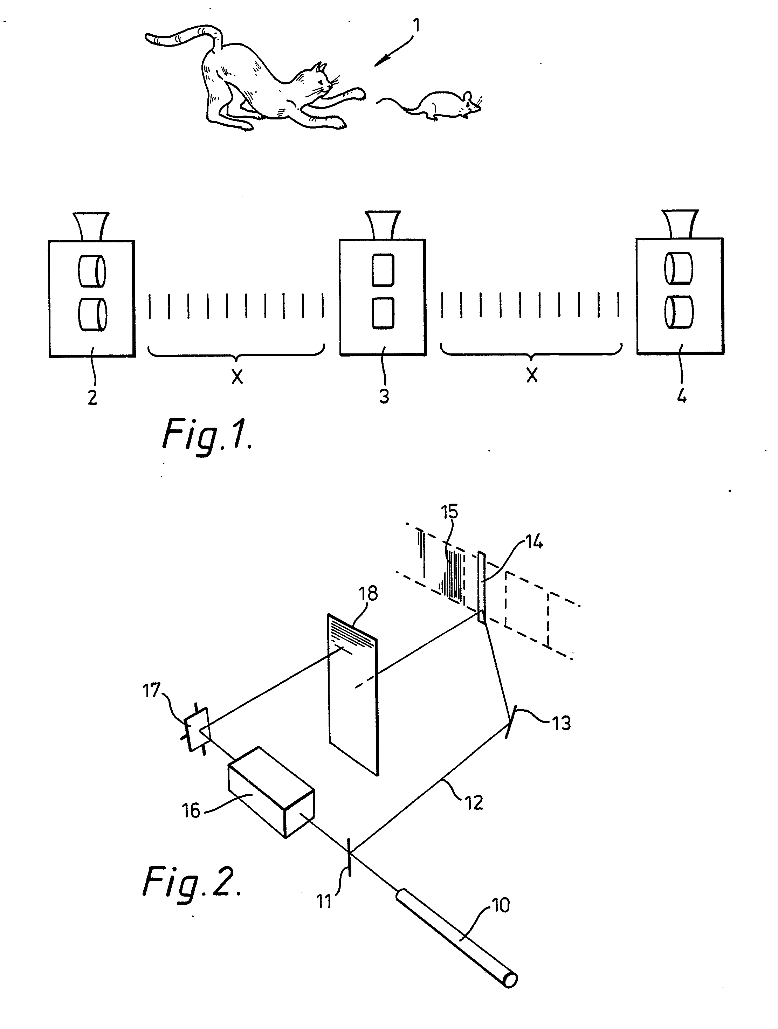

This example produces a movie film having a monochrome three-dimensional image. The subject of the film may be an existing location or a conventional movie set lit by natural or conventional movie lighting. The set and any characters on it are indicated by reference numeral 1 in Figure 1. In this example the scene is recorded using three conventional cine-cameras 2, 3 and 4. The three cameras are synchronised with one another so that they expose frames in precise register with one another and at the same rate. The resulting exposed films are then processed to provide three movie films of the scene each taken from a different viewpoint.

The resulting films are then scanned using, for example, flying spot telecine systems or video cameras to encode the information from each frame of each film into electronic form. The information is then processed by an image processor to interpolate information needed to create intermediate views simulating the 2x camera positions to obtain information on how the scene 1 would have appeared from the x positions between cameras 2 and 3 and the x positions between cameras 3 and 4. The program that is used in the programmed computer to perform this image processing has the following structure:

1. Digitize the first frame of each camera position;

2. Create file A for first frame data:

3. First pass image analysis: Identify easily recognized objects;

4. Second pass analysis: Identify more difficult objects;

5. Third pass analysis: Special cases;

6. Fourth pass analysis: Human intervention if necessary;

7. Identify discrepancies in position of similar objects between adjacent camera positions;

8. Create file B containing information defining each object;

9. Calculate new positions for each object and create file C for each new synthetic view based on the difference in positions of the objects;

10. Digitize second and subsequent frames of each camera position;

11. Create file D for this data;

12. Analyze second and subsequent frames for each camera position until significant change within scene occurs, referring to file A generated during first frame analysis;

13. Create file E of object translations with time;

14. Using data from synthetic position file C and translation file E, create file F - intermediate synthetic views from frame 2 to a significant change of scene;

15. Render outside views for first frames using first frame data from file A only;

16. Render intermediate views for first frame from file C;

17. Render outside views for frame 2 onwards from file D;

18. Using file F render intermediate views from frame 2 onwards; and,

19. Loop to beginning of process.

The analysis performed in stages 3-6 enables particular objects to be recognized. The special cases provided for in stage 5 take account of regularly occurring special cases such as knife edges, the radius of curvature of objects and the degree of acuteness of their angles. Stage 7 enables the shift in the position and appearance of the objects to be identified. In stage 9 the differences identified in stage 7 are sub-divided according to the geometry of the viewpoint being created to determine the location and appearance of the object as seen from that viewpoint. As a result of this image processing, information is created which represents the scene from 3 + 2x viewpoints for each instant in time which is represented by the corresponding frames of the films from each of cameras 2, 3 and 4.

In a first example shown in Figure 2 the viewpoint information is directly transferred into holographic form. In this example light from a laser 10 is split by a beam splitter 11 into two beams. A reference beam 12 is reflected at a mirror 13 and is directed towards a slit 14 mounted in front of a film 15. The other beam passes through a modulator 16 and a scanning device such as a galvanometer mirror 17 to scan it over a screen 18 such as a ground glass screen. As a result of the modulation of the laser beam in the modulator 16 an image is produced as the beam is scanned over the surface of the ground glass screen 18. The light is scattered by the ground glass screen 18 and interferes with the reference beam 12. This forms a hologram or interference pattern on the strip of the film 15 immediately behind the slit 14. The function of the ground glass screen can also be carried out more effectively by a holographic optical element.

Information from each of the 3 + 2x viewpoints recorded in the computer storage system for each instant in time is encoded successively along the film 15 by moving the film behind the slit 14 between the production of each image on the ground glass screen 18 corresponding to each of viewpoints at a particular instant in time. Thus a composite hologram with its strips transverse to the film 15 is recorded on it. The film 15 is then moved on to complete one frame. The information from each of the 3 + 2x viewpoints recorded in the computer storage system for the next instant in time is then recorded on the next frame of film 15, and so on. After development the film 15 thus comprises a sequence of composite holograms and will be referred to subsequently as the master film.

The master film can be viewed by using a laser similar to the laser 10 to produce a reconstruction beam at a similar orientation to the reference beam 12 with a shutter mechanism enabling the film to be viewed only intermittently to view each composite hologram in turn or with the laser illuminating the film being pulsed. In either case the master film is transported between frames in between each view or pulse in a similar fashion to conventional movie films. Instead of being viewed directly the master film example is preferably converted into a white light transmission hologram or a Benton hologram by illuminating it frame-by-frame with a laser beam and causing a reference beam from the same laser to interfere with light scattered from the master film to produce a corresponding frame of a final film. This final film is thus a sequence of white light transmission, composite holograms of successive instants in time. This film can be viewed directly using a continuous point or line source and corresponding shutter mechanism or using a pulsed white light, point or line source. Typically the film is viewed using a conventional optical system using, for example a parabolic mirror and a large aperture Fresnel lens to provide a magnified and expanded image. Alternatively it can be viewed using a three dimensional holographic screen.

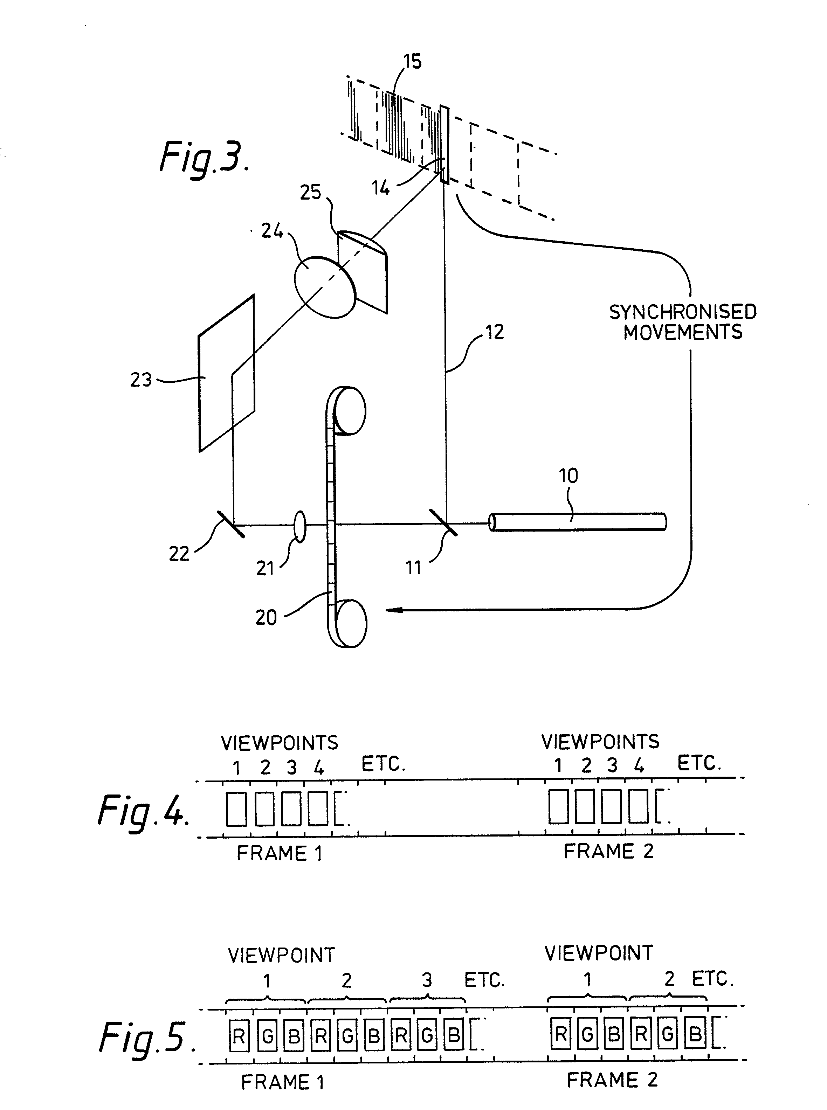

In a second example the viewpoint information is used to create a photographic record in which successive frames of a photographic film represent the image as seen from each of the 3 + 2x viewpoints starting with that seen by the camera 2 and finishing with that seen by the camera 4 for a particular instant in time. The next 3 + 2x frames correspond to the scene as seen from the various viewpoints for the next instant in time, and so on. The typical format of such a film is illustrated in Figure 4. One way of achieving this would be to expose a photographic film using high resolution flying spot tube as the image on which a conventional movie camera is focussed and to drive the flying spot tube from the information contained in the computer store.

Having produced such a photographic film 20 this is then used in the apparatus shown in Figure 3 to produce the composite holograms on the film 15. This example uses a laser 10 as its light source to project an image of successive frames of the film 20 via a lens 21 and mirrors 22 and 23 and large aperture plano-convex lens 24 and cylindrical lens 25 to a slit 14. A reference beam 12 is taken from the laser 10 via the beam splitter 11 and the reference beam is directed towards the slit 14. The reference beam 12 interferes with the light projected by the film 20 to provide a hologram on the film 15 located immediately behind the slit 14. The movement of the film 15 behind the slit 14 is synchronised with the movement of the film 20 past the laser beam and, in practice, a mechanical shutter is included or the laser 10 is pulsed so that each frame of the film 20 is stationary whilst its corresponding strip hologram is formed on the film 15. The transport of the film 20 is also synchronised with the movement of the film 15 so that when the whilst holograms of all of the viewpoints of one particular instant in time have been produced the film 15 then moves on to complete that frame and the process is repeated for all of the viewpoints for the next instant to produce the next frame. Again this produces a sequence of frames each contains a composite hologram representing all of the different viewpoints at each instant in time. The composite hologram that is produced is a white light transmission hologram. However for some applications such as where multiple copies are required it may be desirable to produce a master hologram and then use this to produce white light holograms as in the first example. It is also possible to make copies from the white light transmission holograms. The white light transmission holograms can be viewed directly using a continuous point or line source and corresponding shutter mechanism or using a pulsed white light, point or line source. Typically the film is viewed using a conventional optical system using, for example a parabolic mirror and a large aperture Fresnel lens to provide a magnified and expanded image. Alternatively it can be viewed using a three dimensional holographic screen.

To produce a three dimensional colour film the three cine cameras 2, 3 and 4 are loaded with colour film stock and then red, green and blue colour separations are prepared of these original films. Each colour separation is treated in the same way as described above for a monochrome cine film and then the composite holograms are formed with three times as many stripes each corresponding to a single colour. Figure 5 illustrates the format of the film 20 used when a colour film is being produced with R, G and B indicating the red, green and blue colour separations, respectively.

**Claims**

1. A method of making a three dimensional movie film comprising creating at each of a number of successive instants in time a number of simultaneous images of an object from a number of different viewpoints, using the number of simultaneous images to produce a composite hologram of the object for each particular instant, and recording the composite holograms representing the successive instants one after another in sequence along a film.

2. A method according to claim 1, in which the number of simultaneous images of the object from a number of different viewpoints are created by one or more cameras which create a record of the object from the two or more different positions.

3. A method according to claim 2, in which the camera or cameras are video cameras or cinecameras.

4. A method according to any one of the preceding claims, in which the at least two images obtained from the one or more cameras are processed by image processing means to produce additional images corresponding to the number of viewpoints required to produce the composite holograms.

5. A method according to claim 4, in which images of substantially thirty viewpoints are created.

6. A method according to claim 4 or 5, in which the image processing means includes a programmed computer which is programmed to scan the images from the one or more cameras, interpolate the information contained in these images, and generate information corresponding to the images of the number of required viewpoints.

7. A method according to claim 6, in which the computer includes a viewpoint generating program which analyses the information obtained from the images produced by the two or the two adjacent cameras to identify particular objects, compares and identifies discrepancies between images of the same object produced by the two cameras, and from this comparison generates image information corresponding to the other required viewpoints.

8. A method according to claim 7, in which the computer is also programmed with a time difference program which compares the images from one camera at one instant in time with that from the same camera at a successive instant in time and if these images are generally similar, instead of the computer performing the viewpoint generating program for each instant in time, the information for each viewpoint is merely changed in a way corresponding to any change detected in the successive images from the one camera.

9. A method according to any one of claims 4 to 8, in which once the information concerning the object from the number of different viewpoints has been obtained it is put into a form in which a hologram can be prepared from it by using the information to modulate a laser beam as it is scanned over an image receiving surface and causing light scattered from the surface to interfere with an unmodulated reference beam from the same laser to generate a strip of the composite hologram.

10. A method according to any one of claims 4 to 8, in which once the information concerning the object from the number of different viewpoints has been obtained it is put into a form in which a hologram can be prepared from it by using the information to produce a permanent visible image and then using the resulting permanent visible image as the object in the generation of a strip of the composite hologram.

11. A method according to claim 10, in which the viewpoint information for each frame is used to control the flying spot of a high resolution flying spot tube to produce an image on a frame of a movie film, the movie film so produced having all of the viewpoints at one instant in time arranged as successive frames of a group of frames and then all of the viewpoints at the next instant in time as successive frames of the next group of frames, and so on, each group of frames then being used to generate each composite hologram.

12 A method according to any one of the preceding claims, in which the sequence of composite holograms are white-light transmission holograms or are converted into a corresponding sequence of white-light transmission or Benton holograms to enable them to be viewed using a point or line source of white light.

13. A method according to any one of the preceding claims, in which coloured three dimensional images are produced by obtaining the initial images of the object in full colour and making colour separations of these, and in the process of producing the sequence of composite holograms producing sequential lines in each composite hologram or sequential holograms, in each of the colour separations in turn.

Fig.1.

Fig.2.

Fig.3.

SYNCHRONISED
MOVEMENTS

VIEWPOINTS
1 2 3 4    ETC.

VIEWPOINTS
1 2 3 4    ETC.

Fig.4.

FRAME 1

FRAME 2

VIEWPOINT
1        2        3    ETC.

VIEWPOINT
1        2    ETC.

Fig.5.

R G B R G B R G B [

R G B R G B [

FRAME 1

FRAME 2